# EUROPÄISCHE PATENTSCHRIFT

(11) **EP 3 124 848 B1**
(45) Veröffentlichungstag und Bekanntmachung des Hinweises auf die Patenterteilung: **12.06.2019**
(21) Anmeldenummer: 16165791.1
(22) Anmeldetag: 18.04.2016
(51) Int. Cl.: F16L 33/16, F16L 33/207, F16L 33/18, F16L 17/03

(54) **ANSCHLUSSARMATUR FÜR EINE FLUIDLEITUNG**
CONNECTION FITTING FOR A FLUID CONDUIT
RACCORD POUR UNE CONDUITE DE FLUIDE

(30) Priorität: 31.07.2015 DE 102015214646
(43) Veröffentlichungstag der Anmeldung: 01.02.2017
(73) Patentinhaber: ContiTech Techno-Chemie GmbH, 61184 Karben (DE)
(72) Erfinder: Krumpholz, Marc, 61184 Karben (DE)
(74) Vertreter: Finger, Karsten

(56) Entgegenhaltungen:
- DE-C1- 19 838 125
- FR-A1- 2 824 619
- US-A- 2 453 997

## Beschreibung

Die Erfindung betrifft eine Anschlussarmatur für eine Fluidleitung mit einem in ein Ende einer Fluidleitung hineinragenden Anschlussnippel und einem Befestigungselement, das das Ende der Fluidleitung koaxial umfassen kann und das Ende der Fluidleitung radial gegen den Anschlussnippel pressen kann und einem zwischen Anschlussnippel und Ende der Fluidleitung anordbaren Dichtelement, wobei das Dichtelement radial umlaufend im Wesentlichen den gesamten Bereich des Anschlussnippels bedeckt, welcher Bereich in die Fluidleitung hineinragen kann.

Derartige Armaturen sind bekannt und vielfach im Einsatz. Die DE 39 09 899 A1 zeigt eine entsprechende Armatur, bei der jedoch zur Verbesserung der Langzeitdichtigkeit eine zusätzliche axiale Abdichtung vorgesehen ist.

Die DE 20 2004 001 987 U1 zeigt ein Schlauchanschlussstück, welches eine umlaufende Dichtrille aufweist. Beim Verpressen des Befestigungselements, beispielsweise einer Crimphülse, soll das Schlauchmaterial in diese Rille fließen und dort ähnlich wie ein O-Ring wirken. Bei dieser technischen Lösung besteht jedoch die Gefahr, dass in genau dem Bereich, in dem die Rille angeordnet ist, der Pressdruck der Crimphülse nicht ausreicht. Handelsübliche Crimpringe sind aufgrund deren Geometrie gar nicht einsetzbar. Außerdem ist die Dichtwirkung vom Material des Schlauches abhängig, welches u.U. für eine Dichtung nicht optimal geeignet ist.

In der DE 198 38 125 C1 und der FR 2 824 619 A1 sind Schlauchanschlussvorrichtungen gezeigt, die als Abdichtung zwischen Schlauch und Anschlussnippel einen Dichtring oder mehrere Dichtringe mit Dichtlippe oder O-Ringe aufweisen. Diese Dichtelemente weisen nur eine geringe axiale Ausdehnung auf, so dass bei eventuellen Monatgefehlern, beispielsweise beim Aufschieben des Schlauches die Dichtelemente verschoben oder verdreht werden, so dass eine zuverlässige Dichtwirkung nicht erreichbar ist.

Die US 2 453 997 A zeigt eine derartige Anschlussvorrichtung für eine Fluidleitung mit einem radial wirkenden und axial auf dem Anschlussnippel sich erstreckenden Dichtelement. Das hier offenbarte Dichtelement bedeckt den in die Fluidleitung hineinragenden Bereich des Anschlussnippels nur teilweise. Der Schlauch ist auf einem Halterillen aufweisenden Bereich festklemmbar, wobei die Klemmhülse auch den Bereich der Dichtung überdeckt. Die Klemmhülse (ferrule 12) drückt dabei das Schlauchmaterial auf die Dichtung, wobei sich sowohl der Schlauch als auch die Dichtung verformen. Diese Verformung ist jedoch frei und nur sehr schwer in eine vorbestimmte Form zu bringen, so dass im Kontaktbereich zwischen Schlauch und Dichtung keine Kontrolle der Verformung möglich ist. Daher kann es in diesem Bereich immer noch zu Undichtigkeiten kommen. Der Erfindung liegt die Aufgabe zugrunde, eine Anschlussarmatur der eingangs geschilderten Art so zu verbessern, dass die Dichtheit dauerhaft und unabhängig vom Schlauchmaterial verbessert wird.

Diese Aufgabe wird durch eine Anschlussarmatur gemäß Anspruch 1 gelöst.

Erfindungsgemäß weist das elastomere Dichtelement mindestens eine umlaufende Dichtlippe auf.

Diese Anordnung hat den Vorteil, dass eine Dichtigkeit der Verbindung auch dann gegeben ist, wenn das Befestigungsmittel den in die Fluidleitung eingeschobenen Bereich des Nippels nur teilweise überdeckt. Auch können mit dieser Lösung Fluidleitungen mit einer relativ geringen Elastizität verwendet werden. Eine zusätzliche Dichtlippe kann insbesondere bei wenig elastischen Fluidleitungen die Dichtigkeit verbessern.

Erfindungsgemäß ist die Dichtlippe mittels eines Hinterschnittes derart geformt, dass sie beim Einschieben des Nippels in die Fluidleitung nicht aus der Oberfläche der elastomeren Dichtelement herausragt und bei Beaufschlagung der Verbindung mit Fluiddruck durch eventuell in den Hinterschnitt eindringendes Fluid gegen die Fluidleitung pressbar ist.

Diese Anordnung hat den Vorteil, dass bei eventuell in die Verbindung eindringendem Fluid, beispielsweise bei temporär erhöhtem Druck, die Dichtigkeit der Verbindung gewährleistet bleibt.

In einer Weiterbildung der Erfindung ist das elastomere Dichtelement auf den Anschlussnippel aufgespritzt. Das Aufspritzen hat den Vorteil, dass das Dichtelement nicht verloren gehen kann und beim Einschieben des Nippels in ihrer Lage fixiert ist.

In einer Weiterbildung der Erfindung ist das elastomere Dichtelement auf den Anschlussnippel aufgeschoben. Dies hat den Vorteil, dass das Dichtelement ersetzt werden kann.

Anhand der Zeichnung wird nachstehend ein Beispiel der Erfindung näher erläutert.

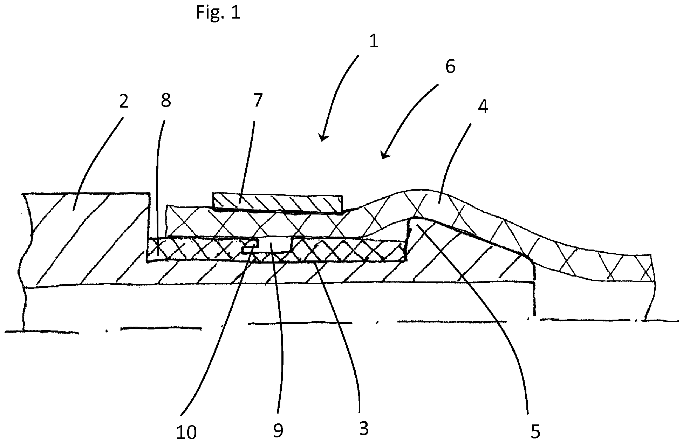

Die Fig. 1 zeigt in einem halben Längsschnitt eine erfindungsgemäße Anschlussarmatur 1 mit einem Anschlussnippel 2. Der Anschlussnippel 2 weist einen Bereich 3 auf, der für das Aufschieben einer Fluidleitung 4 vorgesehen ist. Der Bereich 3 weist eine nasenförmige umlaufende Wulst 5 und einen Klemmbereich 6 auf. Der Wulst 5 dient dazu, den Halt der Fluidleitung 4 auf dem Anschlussnippel 2 zu verbessern. Die auf dem Anschlussnippel 2 aufgeschobene Fluidleitung 4 ist im Bereich 6 mittels eines Crimpringes 7 auf dem Anschlussnippel 2 festgeklemmt. Im Bereich 6 weist der Anschlussnippel eine elastische Dichtung 8 auf. Die Dichtung 8 weist ihrerseits einen Hinterschnitt 9 auf, durch den eine Dichtlippe 10 ausgebildet ist.

Die Fluidleitung ist also durch den Crimpring 7 gegen die Dichtung 8 geklemmt. Die Dichtung 8 ist vorzugsweise aus einem auch bei niedrigen Temperaturen dauerhaft elastischem Material. Dadurch ist gewährleistet, dass auch bei abnehmender Elastizität der Fluidleitung 4 die Dichtigkeit der Verbindung gewährleistet ist.

Für den Fall, dass Fluid zwischen der Wulst 5 und der Fluidleitung 4 eindringt, wird dieses hier nicht gezeigte Fluid den Hinterschnitt 9 ausfüllen. Durch den dabei im Hinterschnitt 9 auftretenden Fluiddruck ist die Dichtlippe 10 gegen die Fluidleitung anpressbar. Dadurch ist auch für diesen Fall eine Dichtigkeit der Verbindung gegeben.

### Bezugszeichenliste

### (Teil der Beschreibung)

- 1: Anschlussarmatur
- 2: Anschlussnippel
- 3: Bereich des Anschlussnippels 2
- 4: Fluidleitung
- 5: Wulst
- 6: Bereich der Fluidleitung
- 7: Crimpring
- 8: Elastische Dichtung
- 9: Hinterschnitt
- 10: Dichtlippe

## Patentansprüche

1. Anschlussarmatur (1) für eine Fluidleitung (4) mit einem in ein Ende einer Fluidleitung (4) hineinragenden Anschlussnippel (2) und einem Befestigungselement (7), das das Ende der Fluidleitung (4) koaxial umfassen kann und das Ende der Fluidleitung (4) radial gegen den Anschlussnippel (2) pressen kann und einem zwischen Anschlussnippel (2) und Ende der Fluidleitung (4) anordbaren elastomeren Dichtelement (8), wobei das Dichtelement (8) radial umlaufend im Wesentlichen den gesamten Bereich (3) des Anschlussnippels (2) bedeckt, welcher Bereich (3) in die Fluidleitung (4) hineinragen kann, wobei das elastomere Dichtelement (8) mindestens eine umlaufende Dichtlippe (10) aufweist, **dadurch gekennzeichnet, dass** die Dichtlippe (10) mittels eines Hinterschnittes (9) derart geformt ist, dass sie beim Einschieben des Anschlussnippels (2) in die Fluidleitung (4) nicht aus der Oberfläche des elastomeren Dichtelementes (8) herausragt und bei Beaufschlagung der Anschlussarmatur (1) mit Fluiddruck durch eventuell in den Hinterschnitt (9) eindringendes Fluid gegen die Fluidleitung (4) pressbar ist.

2. Anschlussarmatur (1) nach Anspruch 1, **dadurch gekennzeichnet, dass** das elastomere Dichtelement (8) auf den Anschlussnippel (2) aufgespritzt ist.

3. Anschlussarmatur (1) nach Anspruch 1, **dadurch gekennzeichnet, dass** das elastomere Dichtelement (8) auf den Anschlussnippel (2) aufgeschoben ist.

## Claims

1. Connection fitting (1) for a fluid line (4), having a connection nipple (2), which projects into one end of a fluid line (4), and having a fastening element (7), which is able to surround the end of the fluid line (4) coaxially and is able to press the end of the fluid line (4) radially against the connection nipple (2), and having an elastomer sealing element (8), which is able to be arranged between the connection nipple (2) and the end of the fluid line (4), wherein the sealing element (8) substantially covers, in a radially encircling manner, the entire region (3) of the connection nipple (2), which region (3) is able to project into the fluid line (4), wherein the elastomer sealing element (8) has at least one encircling sealing lip (10), **characterized in that** the sealing lip (10) is formed by means of an undercut (9) such that, when the connection nipple (2) is inserted into the fluid line (4), said lip does not project from the surface of the elastomer sealing element (8) and, when the connection fitting (1) is subjected to fluid pressure by fluid possibly entering the undercut (9), is able to be pressed against the fluid line (4) .

2. Connection fitting (1) according to Claim 1, **characterized in that** the elastomer sealing element (8) is injection-moulded onto the connection nipple (2) .

3. Connection fitting (1) according to Claim 1, **characterized in that** the elastomer sealing element (8) is pushed onto the connection nipple (2).

## Revendications

1. Garniture de raccordement (1) pour une conduite de fluide (4), comprenant un raccord de connexion (2) pénétrant dans une extrémité d'une conduite de fluide (4) et un élément de fixation (7) qui peut entourer coaxialement l'extrémité de la conduite de fluide (4) et qui peut presser l'extrémité de la conduite de fluide (4) radialement contre le raccord de connexion (2), et un élément d'étanchéité élastomère (8) qui peut être disposé entre le raccord de connexion (2) et l'extrémité de la conduite de fluide (4), l'élément d'étanchéité (8) couvrant essentiellement toute la région (3) du raccord de connexion (2) radialement sur la périphérie, ladite région (3) pouvant pénétrer dans la conduite de fluide (4),
l'élément d'étanchéité élastomère (8) présentant au moins une lèvre d'étanchéité périphérique (10), **caractérisée en ce que** la lèvre d'étanchéité (10) est formée au moyen d'une contre-dépouille (9) de telle sorte que lors de l'insertion du raccord de connexion (2) dans la conduite de fluide (4), elle ne ressorte pas de la surface de l'élément d'étanchéité élastomère (8) et que lors de la sollicitation de la garniture de raccordement (1) avec une pression de fluide par un fluide pénétrant éventuellement dans la contre-dépouille (9), elle puisse être pressée contre la conduite de fluide (4).

2. Garniture de raccordement (1) selon la revendication 1, **caractérisée en ce que** l'élément d'étanchéité élastomère (8) est surmoulé par injection sur le raccord de connexion (2).

3. Garniture de raccordement (1) selon la revendication 1, **caractérisée en ce que** l'élément d'étanchéité élastomère (8) est enfoncé sur le raccord de connexion (2).
